# NOUVEAU FASCICULE DE BREVET EUROPEEN

(11) **EP 3 277 938 B2**
(45) Date de publication et mention de la décision concernant l'opposition: **09.02.2022**
(45) Mention de la délivrance du brevet: 06.03.2019
(21) Numéro de dépôt: 16729299.4
(22) Date de dépôt: 01.04.2016
(51) Int. Cl.: F02C 7/06, F04C 28/12, F01M 5/00, F02C 7/14, F25B 9/02, F25B 41/04, F02C 7/224, F02C 7/18

(54) **REFROIDISSEMENT DU CIRCUIT D'HUILE D'UNE TURBOMACHINE**
KÜHLUNG EINES TURBINENMOTORÖLKREISLAUFS
COOLING OF A TURBINE ENGINE OIL CIRCUIT

(30) Priorité: 03.04.2015 FR 1552920
(43) Date de publication de la demande: 07.02.2018
(73) Titulaire: SAFRAN AIRCRAFT ENGINES, 75015 Paris (FR)
(72) Inventeur: CHALAUD, Sébastien, 77550 Moissy-Cramayel (FR)
(74) Mandataire: Ernest Gutmann - Yves Plasseraud S.A.S.
(86) Numéro de dépôt international: PCT/FR2016/050745
(87) Numéro de publication internationale: WO 2016/156756

(56) Documents cités:
- EP-A1- 2 476 973
- WO-A1-2010/051011
- WO-A1-2014/013170
- FR-A1- 2 951 228
- US-A- 2 970 437
- US-A- 5 131 235

## Description

La présente invention concerne une turbomachine, telle qu'un turboréacteur ou un turbopropulseur d'avion, comportant au moins un circuit d'huile et des moyens de refroidissement de l'huile de ce circuit.

De façon connue, une turbomachine comprend un circuit d'huile pour la lubrification et le refroidissement d'équipements, tels que notamment des paliers à roulements ou des organes d'engrenages, et comprend également un circuit de carburant alimentant des injecteurs montés dans une chambre de combustion.

Il est connu de relier les circuits d'huile et de carburant par des échangeurs de chaleur dans le but d'éviter un échauffement important de l'huile de lubrification, l'huile étant refroidie par échange de chaleur avec le carburant.

A cette fin, on utilise un échangeur de chaleur huile/carburant agencé dans les circuits d'huile et de carburant en aval ou en amont d'un ou plusieurs échangeur(s) de chaleur huile/air monté(s) dans le circuit d'huile. L'échangeur de chaleur huile/air est parcouru ou balayé par un flux d'air provenant de l'extérieur ou de l'intérieur de la turbomachine.

L'échangeur de chaleur huile/air est nécessaire pour refroidir l'huile lorsque, pour certains points de fonctionnement de la turbomachine, l'échangeur de chaleur huile/carburant ne permet pas de suffisamment refroidir l'huile.

D'autres solutions sont également connues de l'art antérieur, comme notamment l'utilisation d'un clapet thermostatique dans une conduite de dérivation à l'entrée de l'échangeur de chaleur huile/air ou encore l'utilisation de volets d'obturation de l'alimentation en air.

Les demandes FR 2 951 228, FR 1 061 138 et FR 1 157 953 de la Demanderesse décrivent des architectures de circuits d'huile et de carburant dans une turbomachine.

L'échangeur de chaleur huile/air est par exemple du type à refroidissement de surface, c'est-à-dire qu'il comprend des conduits d'huile balayés par un flux d'air froid provenant d'un flux d'air de contournement du turboréacteur appelé flux d'air secondaire. Un tel échangeur est par exemple logé sur une paroi du canal du flux secondaire, immédiatement en aval de la soufflante.

L'échangeur de chaleur huile/air peut aussi être du type à plaques et traversé par un flux d'air prélevé dans le flux d'air secondaire et réinjecté en sortie dans celui-ci.

Les échangeurs actuels ont des rendements relativement faibles, ce qui oblige à utiliser des échangeurs relativement encombrants. Or, comme ceux-ci sont placés dans le flux d'air secondaire, ils engendrent des perturbations aérodynamiques qui augmentent avec leurs dimensions, ce qui pénalise le rendement global de la turbomachine.

Afin de remédier à cet inconvénient, la demande de brevet FR 2 993 610 au nom de la Demanderesse propose une turbomachine, telle qu'un turboréacteur ou un turbopropulseur d'avion, comportant au moins un circuit d'huile et des moyens de refroidissement de l'huile de ce circuit comportant un circuit de fluide frigorigène équipé d'un premier échangeur de chaleur apte à échanger de la chaleur entre le fluide frigorigène et de l'air et formant un condenseur, un second échangeur de chaleur apte à échanger de la chaleur entre le fluide frigorigène et l'huile du circuit d'huile et formant un évaporateur, un détendeur monté en aval du premier échangeur et en amont du second échangeur, dans le sens de circulation du fluide frigorigène, et un compresseur monté en aval du second échangeur et en amont du premier échangeur.

De cette manière, le circuit d'huile n'est plus refroidi à l'aide d'un simple échangeur de chaleur de type air/huile mais à l'aide d'un dispositif thermodynamique du type pompe à chaleur.

Dans ce dispositif, la chaleur est prélevée sur l'huile par l'évaporateur, puis transférée à l'air par le condenseur.

Un tel dispositif thermodynamique offre un bon rendement, ce qui permet en particulier de limiter la taille de l'échangeur entre l'air et le fluide frigorigène de façon à ne pas impacter le rendement global de la turbomachine.

Il existe un besoin d'améliorer encore le rendement global de la turbomachine.

A cet effet, l'invention propose, selon la revendication 1, un turboréacteur ou un turbopropulseur d'avion, comportant au moins un circuit d'huile et des moyens de refroidissement de l'huile de ce circuit, les moyens de refroidissement comportant un circuit de fluide frigorigène équipé d'un premier échangeur de chaleur apte à échanger de la chaleur entre le fluide frigorigène et de l'air et formant un condenseur, un second échangeur de chaleur apte à échanger de la chaleur entre le fluide frigorigène et l'huile du circuit d'huile et formant un évaporateur, un détendeur monté en aval du premier échangeur et en amont du second échangeur, dans le sens de circulation du fluide frigorigène, et un compresseur monté en aval du second échangeur et en amont du premier échangeur, caractérisée en ce que les moyens de refroidissement comportent des premiers moyens de régulation aptes à réguler la pression du fluide frigorigène entrant dans le premier échangeur.

De cette manière, il est possible de faire varier la pression du fluide frigorigène traversant le premier échangeur de chaleur, c'est-à-dire le condenseur, en fonction notamment des conditions de vol ou des conditions extérieures.

C'est ainsi que, dans des conditions dites chaudes, lorsque la température de l'air extérieure est plus chaude, il est nécessaire d'augmenter la pression du fluide frigorigène traversant le condenseur, afin d'évacuer une quantité suffisante de calories et assurer un refroidissement suffisant de l'huile du circuit correspondant. Ce mode de fonctionnement, qui représente une faible part des cas de fonctionnement ou de vol, est relativement coûteux en énergie puisqu'il nécessite d'apporter suffisamment de puissance au compresseur pour pouvoir atteindre la pression nécessaire à l'entrée du premier échangeur.

A l'inverse, dans la majorité des cas de fonctionnement ou de vol, lorsque la température de l'air extérieure est moins chaude, la pression du fluide frigorigène traversant le condenseur peut être abaissée tout en assurant un refroidissement suffisant de l'huile. Dans ce cas, il est possible de réduire la puissance consommée par le compresseur et améliorer ainsi le rendement global de la turbomachine.

La turbomachine peut également comporter des seconds moyens de régulation aptes à réguler le débit de fluide frigorigène entrant dans le premier échangeur.

Le débit de fluide frigorigène est notamment fonction de la pression en entrée du premier échangeur de chaleur.

Selon une forme de réalisation de l'invention, le compresseur est un compresseur volumétrique à vis.

Dans ce cas, les premiers moyens de régulation comportent un tiroir mobile dont la position peut être ajustée par rapport aux vis du compresseur, la pression du fluide frigorigène en sortie du compresseur étant dépendante de la position dudit tiroir, les premiers moyens de régulation comportant des moyens de commande de la position dudit tiroir.

Un tel compresseur à vis équipé d'un tiroir mobile est notamment connu des documents FR 2 501 799, EP 0 162 157 et US 7 588 430, pour d'autres applications.

Par ailleurs, les seconds moyens de régulation peuvent comporter des moyens aptes à commander la vitesse de rotation des vis du compresseur.

En effet, dans le cas d'un compresseur volumétrique, le débit en sortie dudit compresseur est dépendant de la vitesse de rotation des vis.

Selon une autre forme de réalisation de l'invention, le compresseur est un compresseur centrifuge comportant un rotor dont la vitesse de rotation influe sur la pression du fluide frigorigène en sortie du compresseur.

Dans ce cas, les premiers moyens de régulation comportent des moyens de commande de la vitesse de rotation du rotor.

En effet, dans le cas d'un compresseur volumétrique, la pression en sortie dudit compresseur est dépendante de la vitesse de rotation du rotor.

Par ailleurs, les seconds moyens de régulation comportent un diaphragme à section variable situé en aval dudit compresseur centrifuge et des moyens de commande de la section dudit diaphragme.

En effet, le débit de fluide frigorigène en sortie du diaphragme est dépendant de sa section.

La turbomachine peut également comporter des moyens de calcul aptes à déterminer :
- la vitesse nécessaire de rotation des vis du compresseur volumétrique ou la vitesse nécessaire de rotation du rotor du compresseur centrifuge, et/ou
- la section nécessaire du diaphragme ou la position nécessaire du tiroir du compresseur volumétrique à vis,
en fonction
- de paramètres d'entrée, tels notamment que la température de l'air extérieur à la turbomachine, les caractéristiques du compresseur, la température de l'huile en un point du circuit d'huile, la vitesse de rotation du rotor ou des vis du compresseur, la section du diaphragme ou la position du tiroir,
- d'une température d'huile à respecter dans le circuit d'huile, et/ou
- d'un modèle mathématique des moyens de refroidissement.

On notera que les caractéristiques du compresseur peuvent notamment être sa courbe caractéristique donnant par exemple la pression et/ou le débit en sortie du compresseur, en fonction de la vitesse de rotation des vis ou du rotor dudit compresseur.

De préférence, la turbomachine comporte une veine secondaire de passage d'un flux secondaire issu d'une soufflante, le premier échangeur étant disposé dans la veine secondaire.

En variante, le premier échangeur est conçu pour échanger de la chaleur entre le fluide frigorigène et de l'air ambiant, externe à la turbomachine.

Selon une caractéristique de l'invention, le circuit d'huile peut être conçu pour lubrifier et/ou refroidir des éléments du moteur de la turbomachine et/ou un équipement, tel qu'un générateur électrique.

L'invention concerne également un système de refroidissement selon la revendication 11, le système de refroidissement étant configuré pour refroidir un fluide d'un circuit de fluide chaud d'une turbomachine d'aéronef, comportant un circuit de fluide frigorigène comprenant :
un premier échangeur de chaleur formant un condenseur, apte à échanger de la chaleur entre le fluide frigorigène et de l'air,
un second échangeur de chaleur formant un évaporateur, apte à échanger de la chaleur entre le fluide frigorigène et le fluide du circuit de fluide chaud, et
un compresseur monté en aval du second échangeur et en amont du premier échangeur, dans le sens de circulation du fluide frigorigène, et un détendeur monté en aval du premier échangeur et en amont du second échangeur,
le système de refroidissement comprenant des premiers moyens de régulation aptes à réguler la pression du fluide frigorigène entrant dans le premier échangeur.

Le fluide du circuit de fluide chaud est de l'huile pour la lubrification d'équipements de la turbomachine.

Le détendeur peut être intégré à une canalisation du circuit de fluide frigorigène, ladite canalisation reliant le premier échangeur au second échangeur, et le détendeur étant formé par un rétrécissement local de la section de passage de la canalisation.

Le détendeur n'est alors pas un organe monté sur une canalisation, mais peut être formé par la canalisation elle-même.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en perspective d'une turbomachine de l'art antérieur ;
- la figure 2 est une représentation schématique partielle d'un circuit d'huile et des moyens de refroidissement conformément à l'art antérieur ;
- la figure 3 est une vue correspondant à la figure 2, représentant une première forme de réalisation de l'invention ;
- la figure 4 est une vue schématique en coupe d'un compresseur volumétrique à vis équipé d'un tiroir mobile ;
- la figure 5 est une vue correspondant à la figure 2, représentant une seconde forme de réalisation de l'invention.

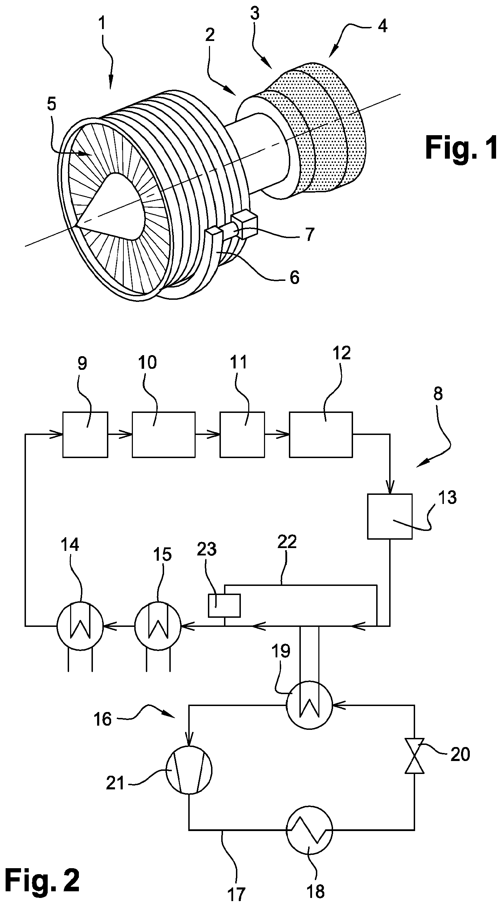

La figure 1 illustre une turbomachine 1 de l'art antérieur comprenant une chambre de combustion 2, les gaz de combustion issus de la chambre entrainant une turbine haute pression 3 et une turbine basse pression 4. La turbine haute pression 3 est couplée par un arbre à un compresseur haute pression agencé en amont de la chambre de combustion 2 et alimentant cette dernière en air sous pression. La turbine basse pression 4 est couplée par un autre arbre à une roue de soufflante 5 agencée à l'extrémité amont de la turbomachine 1.

Une boite de transmission 6, ou boite d'accessoires, est reliée par une prise de puissance mécanique 7 à l'arbre de turbine haute pression 3 et comprend un ensemble de pignons d'entrainement de différents équipements de la turbomachine, tels que des pompes et des générateurs, notamment électriques. D'autres transmissions de puissance peuvent également être utilisées.

La figure 2 représente un circuit d'huile 8 de la turbomachine de la figure 1.

Le circuit d'huile 8 comprend, de l'amont vers l'aval dans le sens d'écoulement de l'huile, différents ensembles 9 utilisant de l'huile de lubrification et/ou de refroidissement, des pompes 10 de récupération permettant la recirculation d'huile depuis les équipements vers un réservoir 11, des pompes d'alimentation 12 et un filtre 13.

Outre l'huile utilisée pour la lubrification et le refroidissement de la turbomachine 1, notamment des paliers d'arbres de turbines et de compresseurs, le flux d'huile global peut comprendre de l'huile utilisée pour la lubrification du boîtier d'accessoires et pour la lubrification et le refroidissement d'un ou plusieurs générateurs électriques.

Le circuit d'huile 8 comprend deux échangeurs de chaleur montés en série entre le filtre 13 et les ensembles 9, à savoir un échangeur de chaleur principal huile/carburant 14 et un échangeur de chaleur secondaire huile/carburant 15.

Le dispositif comporte en outre un dispositif thermodynamique 16 du type pompe à chaleur. Ce dispositif 16 comporte un circuit de fluide frigorigène 17 équipé d'un premier échangeur de chaleur 18 apte à échanger de la chaleur entre le fluide frigorigène et de l'air et formant un condenseur, un second échangeur de chaleur 19 apte à échanger de la chaleur entre le fluide frigorigène et l'huile du circuit d'huile 8 et formant un évaporateur, un détendeur 20 monté en aval du premier échangeur 18 et en amont du second échangeur 19, dans le sens de circulation du fluide frigorigène, et un compresseur 21 monté en aval du second échangeur 19 et en amont du premier échangeur 18.

Le premier échangeur 18 est de préférence disposé dans la veine secondaire de passage d'un flux secondaire issu de la soufflante 5 de la turbomachine 1.

Le circuit d'huile 8 comporte de plus une conduite 22 montée dans le circuit d'huile 8 en dérivation sur le second échangeur de chaleur 19 et comprend une entrée agencée entre la sortie du filtre 13 et l'entrée du second échangeur de chaleur 19 et une sortie agencée entre la sortie dudit second échangeur de chaleur 19 et l'entrée de l'échangeur de chaleur secondaire huile/carburant 15. Un clapet hydraulique 23 est monté dans la conduite de dérivation 22 et commande le passage du débit d'huile dans le second échangeur 19 ou à travers la conduite de dérivation 22.

En fonctionnement, lorsqu'il est nécessaire de refroidir l'huile du circuit 8, le compresseur 21 est mis en route. L'évaporateur 19 permet alors de vaporiser le fluide frigorigène en prélevant de la chaleur sur l'huile. Le compresseur 21 permet d'augmenter la pression et la température du fluide frigorigène en phase vapeur avant que ce dernier ne traverse le condenseur 18 où il libère de la chaleur dans l'air, par passage de l'état gazeux à l'état liquide. Le fluide frigorigène en phase liquide traverse ensuite le détendeur 20 qui a pour rôle de réduire sa pression et d'abaisser sa température, avant de traverser à nouveau l'évaporateur 19.

On notera également que, en conditions froides de fonctionnement, le clapet 23 peut être ouvert pour autoriser le passage d'huile à travers la conduite de dérivation 22.

Un tel dispositif est en général caractérisé par son coefficient de performance (COP) qui peut être par exemple de l'ordre de 5. Ceci signifie que, pour une unité d'énergie apportée au compresseur 21 (sous forme d'énergie électrique), cinq unités d'énergie (sous forme de chaleur) sont prélevées à l'huile et transférées à l'air.

Le bon rendement d'un tel dispositif 16 permet donc de limiter la taille de l'échangeur 18 entre l'air et le fluide frigorigène, de façon à ne pas impacter fortement le rendement de la turbomachine.

En particulier, la taille de l'échangeur 18 est limitée par le fait que l'on peut avoir des échanges entre le fluide frigorigène et l'air avec des différences de température importantes.

Comme indiqué précédemment, il apparait cependant nécessaire d'améliorer encore le rendement global de l'ensemble.

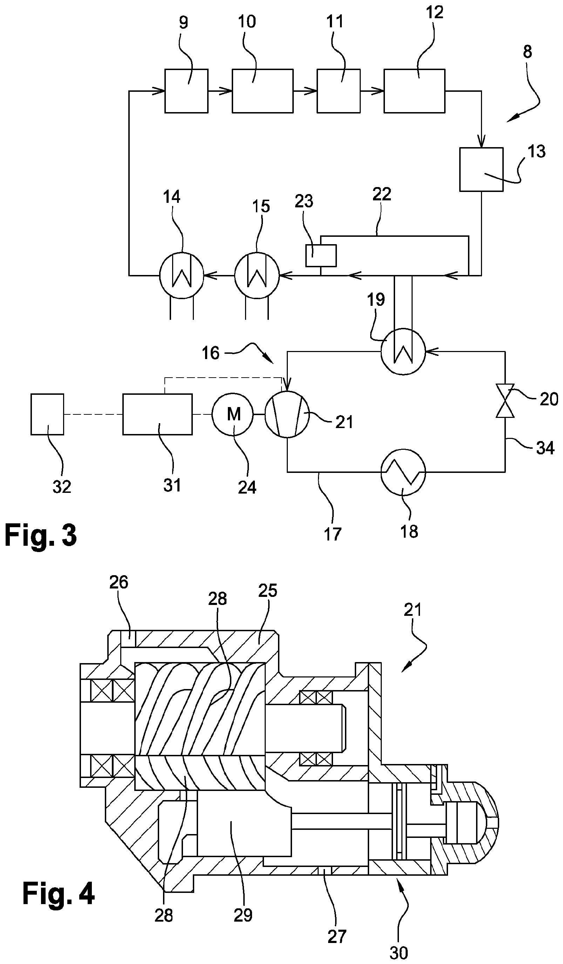

Les figures 3 et 4 illustrent une première forme de réalisation de l'invention dans laquelle le compresseur 21 est un compresseur volumétrique à vis actionné par exemple par un moteur électrique 24. La structure générale d'un tel compresseur 21 est notamment connue des documents FR 2 501 799, EP 0 162 157 et US 7 588 430 et va maintenant être détaillée en référence à la figure 4.

Ce compresseur volumétrique 21 comporte un carter 25 comprenant une entrée 26 de fluide frigorigène à basse pression et une sortie 27 de fluide frigorigène à haute pression, ledit carter 25 logeant deux rotors ou vis rotatives 28. Les rotors 28 comprennent des dentures hélicoïdales, l'un desdits rotors 28 formant un rotor mâle ou menant, actionné par un moteur électrique, l'autre rotor 28 formant un rotor femelle mené ou entraîné en rotation par la rotation du rotor mâle. Les deux rotors 28 ont des axes parallèles et engrènent l'un avec l'autre en délimitant entre eux et avec le carter un passage de circulation de fluide frigorigène tendant à rétrécir en s'éloignant de l'entrée 26 du carter 25. Ainsi, plus le fluide frigorigène progresse le long desdits rotors 28, à l'opposé de l'entrée 26, plus ce fluide est compressé. La longueur du trajet de compression parcouru par le fluide frigorigène peut être ajustée à l'aide d'un tiroir mobile 29 se déplaçant de façon étanche par rapport auxdits rotors 28. En d'autres termes, par référence à la figure 4, plus le tiroir 29 est situé à gauche, c'est-à-dire vers l'entrée 26, plus la pression en sortie du compresseur 21 sera faible, et plus le tiroir est situé à droite, c'est-à-dire vers la sortie 27, plus la pression en sortie du compresseur 21 sera importante.

La position du tiroir 29 peut être détectée par un capteur de position, tel par exemple qu'un capteur LVDT (acronyme pour LINEAR VARIABLE DIFFENTIAL TRANSFORMER).

Le tiroir 29 peut être déplacé par tous moyens appropriés, tels par exemple qu'un actionneur 30 électrique ou hydraulique.

Par ailleurs, comme cela est connu en soi, le débit en sortie du compresseur 21 est fonction de la vitesse de rotation des vis ou rotors 28.

La turbomachine 1 comporte en outre des moyens de calcul 31, formés par exemple par un calculateur tel que le FADEC (acronyme pour FULL AUTHORITY DIGITAL ENGINE CONTROL), aptes à déterminer la vitesse de rotation des rotors 28 et la position du tiroir 29 nécessaires pour assurer un bon refroidissement de l'huile du circuit 8 correspondant, en fonction de tout ou partie des éléments 32 suivants :
- des paramètres d'entrée, tels notamment que la température de l'air extérieur à la turbomachine, les caractéristiques du compresseur 21, la température de l'huile en un point du circuit d'huile 8, la vitesse de rotation des rotors ou vis 28 du compresseur 21, la position du tiroir 29,
- une température d'huile à respecter dans le circuit d'huile 8, et/ou
- un modèle mathématique des moyens de refroidissement 16.

L'invention permet ainsi d'ajuster la pression du fluide frigorigène en entrée du condenseur 18, par l'intermédiaire de la position du tiroir 29, et le débit de fluide frigorigène en entrée du condenseur 18, par l'intermédiaire de la vitesse de rotation des rotors 28. L'actionneur 30 du tiroir 29 peut être piloté par les moyens de calcul 31, ou par des moyens de calcul séparés.

Il est ainsi possible d'ajuster la puissance fournie au compresseur 21 aux besoins de refroidissement du circuit d'huile 8, de manière à améliorer le rendement global de la turbomachine 1.

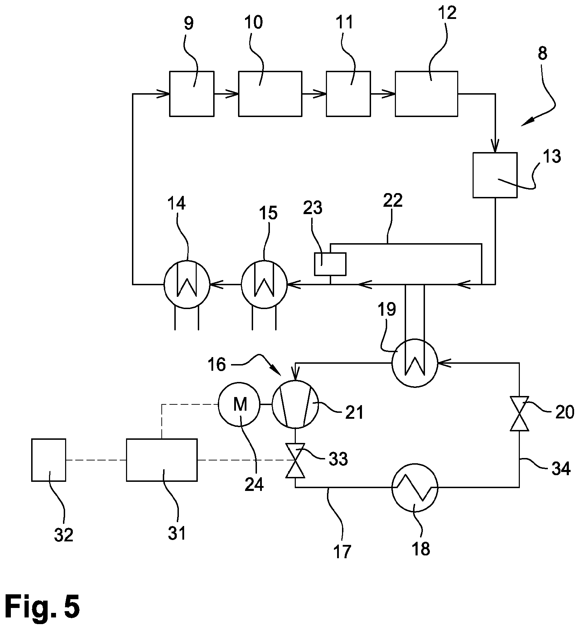

La figure 5 illustre une seconde forme de réalisation dans laquelle le compresseur 21 est un compresseur centrifuge comportant un rotor actionné par exemple par un moteur électrique 24. Pour rappel, dans le cas d'un compresseur centrifuge, la pression en sortie du compresseur 21 est fonction de la vitesse de rotation dudit rotor.

Par ailleurs, dans cette forme de réalisation, un diaphragme à section variable 33 est situé entre la sortie du compresseur centrifuge 21 et l'entrée du condenseur 18. Le débit de fluide frigorigène en sortie du diaphragme 33 peut ainsi être régulé en faisant varier la section de passage dudit diaphragme 33. Un tel diaphragme n'est cependant pas indispensable pour réaliser l'invention.

Dans cette forme de réalisation, les moyens de calcul 31, formés par exemple par le FADEC, sont aptes à déterminer la vitesse de rotation du rotor du compresseur centrifuge 21 et la section du diaphragme variable nécessaires pour assurer un bon refroidissement de l'huile du circuit correspondant, en fonction de tout ou partie des éléments 32 suivants :
- des paramètres d'entrée, tels notamment que la température de l'air extérieur à la turbomachine, les caractéristiques du compresseur 21, la température de l'huile en un point du circuit d'huile 8, la vitesse de rotation du rotor, la section du diaphragme 33,
- une température d'huile à respecter dans le circuit d'huile 8, et
- un modèle mathématique des moyens de refroidissement 16.

L'invention permet ainsi d'ajuster la pression du fluide frigorigène en entrée du condenseur 18, par l'intermédiaire de la vitesse de rotation du rotor du compresseur 21, et le débit de fluide frigorigène en entrée du condenseur 18, par l'intermédiaire de la section du diaphragme 33.

Il est ainsi possible d'ajuster la puissance fournie au compresseur 21 aux besoins de refroidissement du circuit d'huile 8, de manière à améliorer le rendement global de la turbomachine 1.

On notera que l'invention peut également permettre une réduction des dimensions du premier échangeur de chaleur 18, par rapport à l'art antérieur, de façon à réduire la traînée de cet échangeur 18 dans la veine secondaire, améliorant ainsi les performances de la turbomachine 1.

Par ailleurs, comme indiqué précédemment, la puissance à fournir au compresseur 21 peut être réduite dans des proportions pouvant être de l'ordre de 70 % par rapport à l'art antérieur, et ceci dans la majorité des phases de fonctionnement ou de vol.

On notera que le dispositif peut être dépourvu de la conduite de dérivation 22 et du clapet 23 (figure 2). Il est, en effet, notamment possible de réduire la puissance apportée au compresseur. En particulier, il est possible de couper le compresseur 21 dans certaines conditions de vol, notamment durant les décollages par temps extrêmement froid.

En outre, le détendeur 20 peut être intégré à la canalisation 34 du circuit 17 de fluide frigorigène, le détendeur 20 étant par exemple formé par un rétrécissement local de la section de passage de la canalisation 34.

## Revendications

1. Turboréacteur ou un turbopropulseur d'avion, comportant au moins un circuit d'huile (8) et des moyens de refroidissement (16) de l'huile de ce circuit (8), les moyens de refroidissement (16) comportant un circuit (17) de fluide frigorigène équipé d'un premier échangeur de chaleur (18) apte à échanger de la chaleur entre le fluide frigorigène et de l'air et formant un condenseur, un second échangeur de chaleur (19) apte à échanger de la chaleur entre le fluide frigorigène et l'huile du circuit d'huile et formant un évaporateur, un détendeur (20) monté en aval du premier échangeur (18) et en amont du second échangeur (19), dans le sens de circulation du fluide frigorigène, et un compresseur (21) monté en aval du second échangeur (19) et en amont du premier échangeur (18), **caractérisée en ce que** les moyens de refroidissement (16) comportent des premiers moyens de régulation (31, 29, 30, 21, 24) aptes à réguler la pression du fluide frigorigène entrant dans le premier échangeur (18).

2. Turboréacteur ou turbopropulseur d'avion selon la revendication 1, **caractérisée en ce qu'**elle comporte des seconds moyens de régulation (31, 24, 28, 33) aptes à réguler le débit de fluide frigorigène entrant dans le premier échangeur (18).

3. Turboréacteur ou turbopropulseur d'avion selon la revendication 1 ou 2, **caractérisée en ce que** le compresseur (21) est un compresseur volumétrique comprenant des rotors formés par des vis rotatives (28).

4. Turboréacteur ou turbopropulseur d'avion selon la revendication 3, **caractérisée en ce que** les premiers moyens de régulation comportent un tiroir mobile (29) dont la position peut être ajustée par rapport aux rotors (28) du compresseur (21), la pression du fluide frigorigène en sortie du compresseur (21) étant dépendante de la position dudit tiroir (29), les premiers moyens de régulation comportant des moyens de commande (30) de la position dudit tiroir (29).

5. Turboréacteur ou turbopropulseur d'avion selon la revendication 3 ou 4, **caractérisée en ce que** les seconds moyens de régulation comportent des moyens de commande (31, 24) de la vitesse de rotation des rotors (28) du compresseur (21).

6. Turboréacteur ou turbopropulseur d'avion selon la revendication 1 ou 2, **caractérisée en ce que** le compresseur (21) est un compresseur centrifuge comportant un rotor dont la vitesse de rotation influe sur la pression du fluide frigorigène en sortie du compresseur (21).

7. Turboréacteur ou turbopropulseur d'avion selon la revendication 6, **caractérisée en ce que** les premiers moyens de régulation comportent des moyens de commande (31, 24) de la vitesse de rotation du rotor.

8. Turboréacteur ou turbopropulseur d'avion selon la revendication 6 ou 7, **caractérisée en ce que** les seconds moyens de régulation comportent un diaphragme (33) à section variable situé en aval dudit compresseur centrifuge (21) et des moyens de commande (31) de la section dudit diaphragme (33).

9. Turboréacteur ou turbopropulseur d'avion selon la revendication 5 ou 7, **caractérisée en ce que** les moyens de commande de la vitesse de rotation d'au moins un rotor du compresseur (21) comprennent un moteur électrique (24) piloté par un calculateur (31).

10. Turboréacteur ou turbopropulseur d'avion selon l'une des revendications 2 à 9, **caractérisée en ce qu'**elle comporte des moyens de calcul aptes à déterminer :
- la vitesse nécessaire de rotation des vis (28) du compresseur volumétrique (21) ou la vitesse nécessaire de rotation du rotor du compresseur centrifuge (21), et/ou
- la section nécessaire du diaphragme (33) ou la position nécessaire du tiroir (29) du compresseur volumétrique à vis (21),
en fonction
- de paramètres d'entrée, tels notamment que la température de l'air extérieur au turboréacteur ou au turbopropulseur d'avion, les caractéristiques du compresseur (21), la température de l'huile en un point du circuit d'huile (8), la vitesse de rotation du rotor ou des vis (28) du compresseur (21), la section du diaphragme (33) ou la position du tiroir (29),
- d'une température d'huile à respecter dans le circuit d'huile (8), et/ou
- d'un modèle mathématique des moyens de refroidissement (16).

11. Système de refroidissement (16) pour refroidir un fluide d'un circuit de fluide chaud d'une turbomachine (1) d'aéronef, comportant un circuit (17) de fluide frigorigène comprenant :
un premier échangeur de chaleur (18) formant un condenseur, apte à échanger de la chaleur entre le fluide frigorigène et de l'air,
un second échangeur de chaleur (19) formant un évaporateur, apte à échanger de la chaleur entre le fluide frigorigène et le fluide du circuit de fluide chaud, et
un compresseur (21) monté en aval du second échangeur (19) et en amont du premier échangeur (18), dans le sens de circulation du fluide frigorigène, et un détendeur (20) monté en aval du premier échangeur (18) et en amont du second échangeur (19),
le système de refroidissement (16) comprenant des premiers moyens de régulation (31, 29, 30, 21, 24) aptes à réguler la pression du fluide frigorigène entrant dans le premier échangeur (18), le fluide du circuit de fluide chaud étant de l'huile pour la lubrification d'équipements de la turbomachine (1).

12. Système de refroidissement selon la revendication 11, dans lequel le détendeur (20) est intégré à une canalisation (34) du circuit (17) de fluide frigorigène, ladite canalisation (34) reliant le premier échangeur (18) au second échangeur (19), et dans lequel le détendeur (20) est formé par un rétrécissement local de la section de passage de la canalisation (34).

## Patentansprüche

1. Turbostrahltriebwerk oder ein Turbopropellertriebwerk eines Flugzeugs, welche mindestens einen Ölkreis (8) und Mittel zum Kühlen (16) des Öls dieses Kreises (8) umfasst, wobei die Kühlmittel (16) einen Kältemittelkreis (17) mit einem ersten Wärmetauscher (18) umfassen, der zwischen dem Kältemittel und der Luft Wärme austauschen kann und einen Kondensator bildet, einem zweiten Wärmetauscher (19), der zwischen dem Kältemittel und dem Öl des Kreises Wärme austauschen kann und einen Verdampfer bildet, einem Druckminderer (20), der hinter dem ersten Wärmetauscher (18) und vor dem zweiten Wärmetauscher (19) in Fließrichtung des Kältemittels montiert ist, und einem Verdichter (21), der hinter dem zweiten Wärmetauscher (19) und vor dem ersten Wärmetauscher (18) montiert ist, **dadurch gekennzeichnet, dass** die Kühlmittel (16) erste Regulierungsmittel (31, 29, 30, 21, 24) aufweisen, die den Druck des in den ersten Wärmetauscher (18) eintretenden Kältemittels regulieren können.

2. Turbostrahltriebwerk oder ein Turbopropellertriebwerk eines Flugzeugs nach Anspruch 1, **dadurch gekennzeichnet, dass** sie zweite Regulierungsmittel (31, 24, 28, 33) enthält, die in der Lage sind, den Durchsatz des in den ersten Wärmetauscher (18) eintretenden Kältemittels zu regulieren.

3. Turbostrahltriebwerk oder ein Turbopropellertriebwerk eines Flugzeugs nach Anspruch 1 oder 2, **dadurch gekennzeichnet, dass** der Verdichter (21) ein Verdrängerverdichter ist, der Rotoren enthält, die durch rotierende Schrauben (28) gebildet werden.

4. Turbostrahltriebwerk oder ein Turbopropellertriebwerk eines Flugzeugs nach Anspruch 3, **dadurch gekennzeichnet, dass** die ersten Regulierungsmittel einen beweglichen Schieber (29) aufweisen, dessen Position an die Rotoren (28) des Verdichters (21) angepasst werden kann, wobei der Druck des aus dem Verdichter (21) austretenden Kältemittels von der Position des besagten Schiebers (29) abhängt und die ersten Regulierungsmittel Mittel zur Steuerung (30) der Position des besagten Schiebers (29) umfassen.

5. Turbostrahltriebwerk oder ein Turbopropellertriebwerk eines Flugzeugs nach Anspruch 3 oder 4, **dadurch gekennzeichnet, dass** die zweiten Regulierungsmittel Mittel zur Steuerung (31, 24) der Drehgeschwindigkeit der Rotoren (28) des Verdichters (21) umfassen.

6. Turbostrahltriebwerk oder ein Turbopropellertriebwerk eines Flugzeugs nach Anspruch 1 oder 2, **dadurch gekennzeichnet, dass** der Verdichter (21) ein Kreiselverdichter mit einem Rotor ist, dessen Drehgeschwindigkeit den Druck des aus dem Verdichter (21) austretenden Kältemittels beeinflusst.

7. Turbostrahltriebwerk oder ein Turbopropellertriebwerk eines Flugzeugs nach Anspruch 6, **dadurch gekennzeichnet, dass** die ersten Regulierungsmittel Mittel zur Steuerung (31, 24) der Drehgeschwindigkeit des Rotors umfassen.

8. Turbostrahltriebwerk oder ein Turbopropellertriebwerk eines Flugzeugs nach Anspruch 6 oder 7, **dadurch gekennzeichnet, dass** die zweiten Regulierungsmittel hinter besagtem Kreiselverdichter (21) eine Blende (33) mit veränderlichen Querschnitt aufweisen, und Mittel zur Steuerung (31) des Querschnitts der besagten Blende (33).

9. Turbostrahltriebwerk oder ein Turbopropellertriebwerk eines Flugzeugs nach Anspruch 5 oder 7, **dadurch gekennzeichnet, dass** Mittel zur Steuerung der Drehgeschwindigkeit von mindestens einem Rotor des Verdichters (21) einen Elektromotor (24) enthalten, der von einem Rechner (31) gesteuert wird.

10. Turbostrahltriebwerk oder ein Turbopropellertriebwerk eines Flugzeugs nach einem der Ansprüche 2 bis 9, **dadurch gekennzeichnet, dass** sie Mittel zur Berechnung:
- der Geschwindigkeit aufweist, die für die Drehung der Schrauben (28) des Verdrängerverdichters (21) oder für die Drehung des Rotors des Kreiselverdichters (21) erforderlich ist, und/oder
- des erforderlichen Querschnitts der Blende (33) oder der erforderlichen Position des Schiebers (29) des Verdrängerverdichters (21) unter Berücksichtigung
- der Eingangsparameter, wie zum Beispiel der Temperatur der Außenluft der Turbostrahltriebwerk oder der Turbopropellertriebwerk eines Flugzeugs, der technischen Daten des Verdichters (21), der Öltemperatur an einem bestimmten Punkt des Ölkreises (8), der Drehgeschwindigkeit des Rotors oder der Schrauben (28) des Verdichters (21), des Querschnitts der Blende (33) oder der Position des Schiebers (29),
- einer im Ölkreis (8) zu beachtenden Öltemperatur, und/oder
- eines mathematisches Modells für die Kühlmittel (16) .

11. Kühlsystem (16), das so gestaltet ist, dass die Flüssigkeit eines Wärmemittelkreises einer Turbomaschine (1) eines Luftfahrzeugs gekühlt werden kann, wobei das Kühlsystem einen Kältemittelkreis (17) umfasst, der folgendes enthält:
- einen ersten Wärmetauscher (18), der einen Kondensator bildet, und Wärme zwischen dem Kältemittel und der Luft austauschen kann,
- einen zweiten Wärmetauscher (19), der einen Verdampfer bildet und Wärme zwischen dem Kältemittel und dem Fluid des Wärmemittelkreises austauschen kann, und
- einen Verdichter (21), der hinter dem zweiten Wärmetauscher (19) und vor dem ersten Wärmetauscher (18) in Fließrichtung des Kältemittels montiert ist, und ein Druckminderer (20), der hinter dem ersten Wärmetauscher (18) und vor dem zweiten Wärmetauscher (19) montiert ist,
wobei das Kühlsystem (16) erste Regulierungsmittel (31, 29, 30, 21, 24) umfasst, die den Druck des in den ersten Wärmetauscher (18) eintretenden Kältemittels regulieren können, wobei das Fluid des Wärmemittelkreises Öl zur Schmierung der Anlagen der Turbomaschine (1) ist.

12. Kühlsystem nach Anspruch 11, in welchem der Druckminderer (20) in eine Leitung (34) des Kältemittelkreises (17) eingebaut wird, wobei besagte Leitung (34) den ersten Wärmetauscher (18) mit dem zweiten Wärmetauscher (19) verbindet, und in welchem der Druckminderer (20) durch die örtliche Verschmälerung des Durchströmungsquerschnitts der Leitung (34) gebildet wird.

## Claims

1. Turbojet engine or a turboprop engine of an aeroplane, including at least one oil circuit (8) and cooling means (16) for cooling the oil of said circuit (8), the cooling means (16) including a refrigerant circuit (17) provided with a first heat exchanger (18) capable of exchanging heat between the refrigerant and the air and forming a condenser, a second heat exchanger (19) capable of exchanging heat between the refrigerant and the oil of the oil circuit and forming an evaporator, a pressure reducer (20) mounted downstream from the first exchanger (18) and upstream from the second exchanger (19), in the refrigerant flow direction, and a compressor (21) mounted downstream from the second exchanger (19) and upstream from the first exchanger (18), **characterised in that** the cooling means (16) include first regulator means (31, 29, 30, 21, 24) capable of regulating the pressure of the refrigerant entering the first exchanger (18).

2. Turbojet engine or a turboprop engine of an aeroplane according to claim 1, **characterised in that** it includes second regulator means (31, 24, 28, 33) capable of regulating the flow of refrigerant entering the first exchanger (18).

3. Turbojet engine or a turboprop engine of an aeroplane according to claim 1 or 2, **characterised in that** the compressor (21) is a supercharger comprising rotors formed by rotary screws (28).

4. Turbojet engine or a turboprop engine of an aeroplane according to claim 3, **characterised in that** the first regulator means include a mobile slide (29) of which the position can be adjusted relative to the rotors (28) of the compressor (21), the pressure of the refrigerant at the outlet of the compressor (21) being dependent on the position of said slide (29), the first regulator means including means (30) for controlling the position of said slide (29).

5. Turbojet engine or a turboprop engine of an aeroplane according to claim 3 or 4, **characterised in that** the second regulator means include means (31, 24) for controlling the speed of rotation of the rotors (28) of the compressor (21).

6. Turbojet engine or a turboprop engine of an aeroplane according to claim 1 or 2, **characterised in that** the compressor (21) is a centrifugal compressor including a rotor of which the speed of rotation determines the pressure of the refrigerant at the outlet of the compressor (21).

7. Turbojet engine or a turboprop engine of an aeroplane according to claim 6, **characterised in that** the first regulator means include means (31, 24) for controlling the speed of rotation of the rotor.

8. Turbojet engine or a turboprop engine of an aeroplane according to claim 6 or 7, **characterised in that** the second regulator means include a variable-section diaphragm (33) located downstream from said centrifugal compressor (21) and means (31) for controlling the section of said diaphragm (33).

9. Turbojet engine or a turboprop engine of an aeroplane according to claim 5 or 7, **characterised in that** the means for controlling the speed of rotation of at least one rotor of the compressor (21) comprise an electric motor (24) controlled by a computer (31).

10. Turbojet engine or a turboprop engine of an aeroplane according to any claim 2 to 9, **characterised in that** it includes computing means capable of determining:
- the necessary speed of rotation of the screws (28) of the supercharger (21) or the necessary speed of rotation of the rotor of the centrifugal compressor (21), and/or
- the necessary section of the diaphragm (33) or the necessary position of the slide (29) of the twin-screw supercharger (21),
as a function of
- input parameters, in particular such as the temperature of the air outside the turbojet engine or the turboprop engine of an aeroplane, the characteristics of the compressor (21), the temperature of the oil at one point of the oil circuit (8), the speed of rotation of the rotor or of the screws (28) of the compressor (21), the section of the diaphragm (33) or the position of the slide (29),
- an oil temperature to be respected in the oil circuit (8), and/or
- a mathematical model of the cooling means (16).

11. Cooling system (16) for cooling a fluid of a hot fluid circuit of an aircraft turbine engine (1), including a refrigerant circuit (17) comprising:
a first heat exchanger (18) forming a condenser, capable of exchanging heat between the refrigerant and the air,
a second heat exchanger (19) forming an evaporator, capable of exchanging heat between the refrigerant and the fluid of the hot-fluid circuit, and
a compressor (21) mounted downstream from the second exchanger (19) and upstream from the first exchanger (18), in the refrigerant flow direction, and a pressure reducer (20) mounted downstream from the first exchanger (18) and upstream from the second exchanger (19),
the cooling system (16) comprising first regulator means (31, 29, 30, 21, 24) capable of regulating the pressure of the refrigerant entering the first exchanger (18), the fluid of the hot fluid circuit being oil for lubricating systems of the turbine engine (1).

12. Cooling system according to claim 11, wherein the pressure reducer (20) is built into a duct (34) of the refrigerant circuit (17), said duct (34) connecting the first exchanger (18) to the second exchanger (19), and wherein the pressure reducer (20) is formed by a local narrowing of the flow area of the duct (34).
